# EUROPEAN PATENT APPLICATION

(11) **EP 1 720 290 A1**
(43) Date of publication of application: **08.11.2006**
(21) Application number: 05710344.2
(22) Date of filing: 17.02.2005
(51) Int. Cl.: H04L 12/28, H04Q 7/38

(54) **UNAUTHORIZED WIRELESS STATION DETECTING SYSTEM, APPARATUS USED THEREIN, AND METHOD THEREFOR**

(30) Priority: 19.02.2004 JP 2004042303
(71) Applicant: NEC CORPORATION, Minato-ku, Tokyo 108-8001 (JP)
(72) Inventor: NYU, Takayuki, NEC Corporation, Tokyo 108-8001 (JP)
(74) Representative: Glawe, Delfs, Moll
(86) International application number: PCT/JP2005/002494
(87) International publication number: WO 2005/081460

(57) **Abstract**

Wireless stations 300 and 400, being an object of administration, searches a wireless space over a plurality of frequency channels, and acquire a BSS identifier, being a specific ID, and a frame transmission source identifier from a frame propagating through a space. An operation administering apparatus 100 obtains these acquired BSS identifier and frame transmission source identifier, compares its BSS identifier with a registered BSS identifier, thereby to detect an unjust wireless station 500, and simultaneously therewith, determines its classification and producer as well. Further, the operation administering apparatus 100 notifies existence of this unjust wireless station to an administration-object wireless station, i.e. a normal base station 300, a normal terminal 400, a switch apparatus 600, etc., gives an instruction for scrapping a frame from the unjust wireless station 500, disconnecting communication therewith, or the like, thereby enabling a measure for making it impossible to make communication with the unjust wireless station.

## Description

### [APPLICABLE FIELD IN THE INDUSTRY]

The present invention relates to an unjust wireless station detection system, and an operation administering apparatus, a wireless base station and a wireless communication terminal that are used therefor, as well as a method thereof, and more particularly, to a method of monitoring a wireless station that emerges in the environments in which a wireless LAN system is utilized, and of preventing information leakage from the above wireless station.

### [BACKGROUND ART]

With regard to a detection of an unjust access point (AP) in the wireless LAN system, the technology associated with a network security system, a computer unit, a recognition process method of the access point, a check method of the access point, a program, a record medium and a device for a wireless LAN is disclosed in patent document 1.

An SSID that is used as an identifier will be explained before the disclosed invention is explained. In the wireless LAN (IEEE 802.11), a group of a terminal and a base station each of which communicates with the other is referred to as a basic service set, and the identifier of its group as a BSSID. A physical address (MAC (Media Access Control) address) of the base station is used as the identifier in a mode in which the base station and the terminal communicate with each other. In a mode (ad-hoc mode) in which the terminal companions communicate with each other, the identifier assumes an arbitrary value that the terminal allots (its uniqueness is not guaranteed in a strict sense because it is allotted by each terminal). Further, the group (wireless LAN system) that is configured of one BSS or more is referred to as an extended service set (ESS), and the identifier of its group as an SSID.

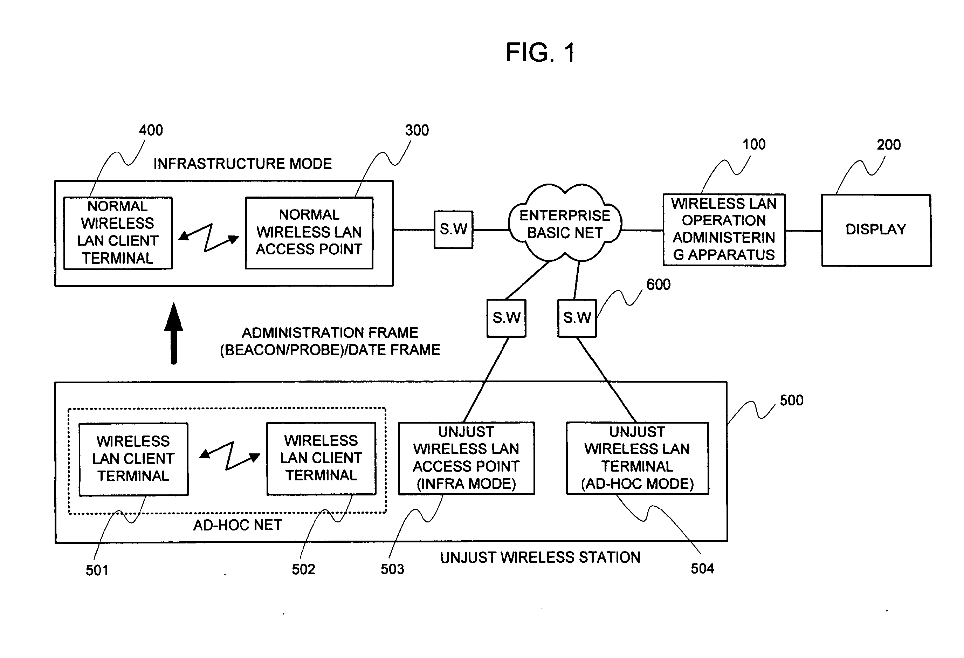

In the disclosed invention, in the wireless LAN system of Fig. 1, a normal (administration-object) wireless LAN client executes a scanning process, thereby to extract the identifier (SSID: Service Set ID) of the wireless LAN from a packet of the surrounding access point (hereinafter, abbreviated to the AP) and to prepare an AP detection list that is configured of the SSIDs. Next, in a case where, as a result of making a comparison with the SSID of a pre-registered AP permission list, the not-registered SSID exits, it is judged that the unjust AP exits, and the location in which the unjust AP exits is notified, which enables its unjust AP to be withdrawn. Further, in the case of having detected the unjust AP, by operating a router, a data is prohibited from being transmitted/received to/from the unjust AP.
[Patent document 1] JP-P2003-198571A

### [DISCLOSURE OF THE INVENTION]

### [PROBLEMS TO BE SOLVED BY THE INVENTION]

The disclosed invention, however, has the following problems. The first problem lies in a point of employing the identifier of the wireless LAN system that is not unique as the identifier of the unjust AP. Specifically, the identifier (SSID: Service Set ID) of the wireless LAN system, which is an identifier to be set at the time of erecting the wireless LAN system, assumes a value that a user can easily change, whereby there exists the problem that the unjust AP telling a falsehood about the SSID, i.e. saying that it is an already-registered one cannot be detected.

Further, as mentioned previously, when the unjust AP is investigated by employing the SSID, it cannot be determined whether the number of the unjust AP is single or plural because the identical identifier (SSID) of the wireless LAN system can be allotted to the wireless LAN base station (AP), which gives to the problem that an administrator who carries out the withdrawal practice of the unjust AP cannot determine the number of the unjust AP that are to be investigated/withdrawn.

The second problem lies in a point of detecting the unjust AP only by means of the identifier (SSID) of the wireless LAN system. Specifically, as the appliance that outputs the identifier (SSID) of the wireless LAN system, there are a wireless LAN base station (AP) that operates in a infrastructure mode, and a wireless LAN client that operates in an ad-hoc mode; however, both of the wireless LAN base station (AP) and the wireless LAN client have to be investigated as a candidate for the unjust AP because each of them is not differentiated from the other in the disclosed invention, which gives rise to the problem that investigation efficiency is bad.

The third problem lies in a point that the wireless LAN appliance provided with a function of concealing the SSID exits in the market, whereby, in a case where the unjust base station (AP) utilizes its function, it cannot be detected. The fourth problem lies in a point that there is no specific description of prohibiting transmission/reception of a data to/from the unjust base station (AP).

The present invention has been accomplished for solving the above-mentioned problems, and an object thereof is to provide an unjust wireless station detection system for realizing both of an improvement in a security by detecting/notifying existence of an unjust wireless station to prevent information from leaking from the above unjust wireless station and an enhancement in efficiency of the above security administration practice, an operation administering apparatus, a wireless base station and a wireless communication terminal that are used therefor as well as a method thereof.

### [MEANS TO SOLVE THE PROBLEM]

The first invention for solving the above-mentioned problem, which is a wireless communication system including an administration-object wireless base station having a specific identifier, is characterized in including an unjust wireless station detecting means for, based upon the specific identifier to be included in a wireless frame, detecting existence of an unjust wireless station.

The second invention for solving the above-mentioned problem is characterized in that, in the above-mentioned first invention, the unjust wireless station detecting means includes: a comparing means for comparing the specific identifier with a pre-registered specific identifier; and a means for determining the unjust wireless station based upon this comparison result.

The third invention for solving the above-mentioned problem is characterized in that, in one of the above-mentioned first and second inventions, when a group of a wireless communication terminal and a wireless base station each of which communicates with the other is assumed to be a basic service set, the specific identifier is an identifier (BSS identifier) for identifying this basic service set.

The fourth invention for solving the above-mentioned problem is characterized in that, in the above-mentioned third invention, the unjust wireless station detecting means further includes a means for determining a classification of the unjust wireless station from the BSS identifier.

The fifth invention for solving the above-mentioned problem is characterized in that, in one of the above-mentioned third to fourth inventions, the unjust wireless station detecting means further includes a means for determining a producer of the unjust wireless station from the BSS identifier.

The sixth invention for solving the above-mentioned problem is characterized, in one of the above-mentioned first to fifth inventions, in: including an administration-object wireless base station having a means for acquiring a wireless frame to obtain the specific identifier, which is administered by a system; and that the unjust wireless station detecting means further includes a means for obtaining the specific identifier from the administration-object wireless base station.

The seventh invention for solving the above-mentioned problem is characterized, in one of the above-mentioned first to fifth inventions, in: including an administration-object wireless communication terminal having a means for acquiring a wireless frame to obtain the specific identifier, which is administered by a system; and that the unjust wireless station detecting means further includes a means for obtaining the specific identifier from the administration-object wireless communication terminal.

The eighth invention for solving the above-mentioned problem is characterized in that, in one of the above-mentioned first to sixth inventions, the unjust wireless station detecting means further includes a means for notifying the effect that utilization of the unjust wireless station is prohibited to the administration-object wireless communication terminal connected to the unjust wireless station.

The ninth invention for solving the above-mentioned problem is characterized, in one of the above-mentioned first and sixth inventions, in: further including a switching apparatus; that the unjust wireless station detecting means further includes a means for detecting an address of the unjust wireless communication terminal connected to the unjust wireless station to notify the address to the switching apparatus: and that the switching apparatus includes a means for scrapping the wireless frame including the address.

The tenth invention for solving the above-mentioned problem is characterized in that, in one of the above-mentioned first to sixth inventions, the unjust wireless station detecting means further includes a means for notifying the unjust wireless communication terminal to the administration-object wireless base station, and further, for notifying the unjust wireless station to the administration-object wireless communication terminal connected to the administration-object wireless base station.

The eleventh invention for solving the above-mentioned problem is characterized in that, in one of the above-mentioned first to sixth inventions, the unjust wireless station detecting means further includes a means for taking a control so as to incapacitate the unjust wireless communication terminal connected to the administration-object wireless base station from communicating.

The twelfth invention for solving the above-mentioned problem is characterized in that, in one of the above-mentioned first to sixth inventions: the unjust wireless station detecting means further includes a means for notifying an identifier (SS identifier) for identifying a service set of the unjust wireless station acquired from the wireless frame to the administration-object wireless base station around the unjust wireless station; and the administration-object wireless base station receiving a notification of the SS identifier includes a means for, in a case of having received a wireless frame from the wireless communication terminal having a connection by using an identical value to that of the SS identifier, scrapping this wireless frame.

The thirteenth invention for solving the above-mentioned problem, which is an operation administering apparatus in a wireless communication system including an administration-object wireless base station having a. specific identifier, is characterized in including an unjust wireless station detecting means for, based upon the specific identifier to be included in a wireless frame, detecting existence of an unjust wireless station.

The fourteenth invention for solving the above-mentioned problem is characterized in that, in the above-mentioned thirteenth invention, the unjust wireless station detecting means includes: a comparing means for comparing the specific identifier with a pre-registered specific identifier; and a means for determining the unjust wireless station based upon this comparison result.

The fifteen invention for solving the above-mentioned problem is characterized in that, in one of the above-mentioned thirteenth and fourteenth inventions, when a group of a wireless communication terminal and a wireless base station each of which communicates with the other is assumed to be a basic service set, the specific identifier is an identifier (BSS identifier) for identifying this basic service set.

The sixteenth invention for solving the above-mentioned problem is characterized in, in the above-mentioned fifteenth invention, further including a means for determining a classification of the unjust wireless station from the BSS identifier.

The seventeenth invention for solving the above-mentioned problem is characterized in, in one of the above-mentioned fifteenth and sixteenth inventions, further including a means for determining a producer of the unjust wireless station from the BSS identifier.

The eighteenth invention for solving the above-mentioned problem is characterized in, in one of the above-mentioned thirteenth to seventeenth inventions, including a means for obtaining the specific identifier from the administration-object wireless base station configured so as to acquire the wireless frame administered by the system, thereby to obtain the specific identifier.

The nineteenth invention for solving the above-mentioned problem is characterized in, in one of the above-mentioned thirteenth to seventeenth inventions, further including a means for obtaining the specific identifier from the administration-object wireless communication terminal configured so as to acquire the wireless frame administered by the system, thereby to obtain the specific identifier.

The twentieth invention for solving the above-mentioned problem is characterized in, in one of the above-mentioned thirteenth to eighteenth inventions, further including a means for notifying the effect that utilization of the unjust wireless station is prohibited to the administration-object wireless communication terminal connected to the unjust wireless station.

The twenty-first invention for solving the above-mentioned problem is characterized in, in one of the above-mentioned thirteenth to eighteenth inventions, further including a means for detecting an address of the unjust wireless communication terminal connected to the unjust wireless station to notify the address to the switching apparatus.

The twenty-second invention for solving the above-mentioned problem is characterized in, in one of the above-mentioned thirteenth to eighteenth inventions, further including a means for notifying the unjust wireless communication terminal to the administration-object wireless base station, and further, for notifying the unjust wireless station to the administration-object wireless communication terminal connected to the administration-object wireless base station.

The twenty-third invention for solving the above-mentioned problem is characterized in, in one of the above-mentioned thirteenth to eighteenth inventions, further including a means for taking a control so as to incapacitate the unjust wireless communication terminal connected to the administration-object wireless base station from communicating.

The twenty-fourth invention for solving the above-mentioned problem is characterized in, in one of the above-mentioned thirteenth to eighteenth inventions, further includes a means for notifying an identifier (SS identifier) for identifying a service set of the unjust wireless station acquired from the wireless frame to the administration-object wireless base station around the unjust wireless station.

The twenty-fifth invention for solving the above-mentioned problem, which is a wireless base station in a wireless communication system including an administration-object wireless base station having a specific identifier and an operation administering apparatus for making an operational administration for a system, is characterized in including: a means for acquiring the specific identifier from a wireless frame; and a means for notifying the specific identifier to the operation administering apparatus in order to detect existence of the unjust wireless station.

The twenty-sixth invention for solving the above-mentioned problem is characterized in, in the above-mentioned twenty-fifth invention, further including a means for receiving a notification of the unjust wireless communication terminal from the operation administrating apparatus to incapacitate the unjust wireless communication terminal from communicating.

The twenty-seventh invention for solving the above-mentioned problem is characterized in, in one of the above-mentioned twenty-fifth and twenty-sixth inventions, further including a means for receiving a notification of an identifier (SS identifier) for identifying a service set of the unjust wireless station from the operation administering apparatus, and for, in the case of having received a wireless frame from the wireless communication terminal having made a connection by using an identical value to that of the SS identifier, scrapping this wireless frame.

The twenty-eighth invention for solving the above-mentioned problem, which is a wireless communication terminal in a wireless communication system including an administration-object wireless base station having a specific identifier and an operation administering apparatus for making an operational administration for a system, is characterized in including: a means for acquiring the specific identifier from a wireless frame; and a means for notifying the specific identifier to the operation administering apparatus in order to detect existence of the unjust wireless station.

The twenty-ninth invention for solving the above-mentioned problem is characterized in, in the above-mentioned twenty-eighth invention, further including a means for prohibiting utilization of the unjust wireless station notified from the operation administering apparatus.

The thirtieth invention for solving the above-mentioned problem, which is an unjust wireless station detection method in a wireless communication system including an administration-object wireless base station having a specific identifier, is characterized in including a step of detecting existence of an unjust wireless station based upon the specific identifier to be included in a wireless frame.

The thirty-first invention for solving the above-mentioned problem, which is an operational control method of a wireless base station in a wireless communication system including an administration-object wireless base station having a specific identifier and an operation administering apparatus for making an operational administration for a system, is characterized in including the steps of: acquiring the specific identifier from a wireless frame; and notifying the specific identifier to the operation administering apparatus in order to detect existence of the unjust wireless station.

The thirty-second invention for solving the above-mentioned problem, which is an operational control method of a wireless communication terminal in a wireless communication system including an administration-object wireless base station having a specific identifier and an operation administering apparatus for making an operational administration for a system, is characterized in including the steps of: acquiring the specific identifier from a wireless frame; and notifying the specific identifier to the operational administration apparatus in order to detect existence of the unjust wireless station.

The thirty-third invention for solving the above-mentioned problem, which is a program for causing a computer to execute an unjust wireless station detection method in a wireless communication system including an administration-object wireless base station having a specific identifier, is characterized in including a process of detecting existence of an unjust wireless station based upon the specific identifier to be included in a wireless frame.

The thirty-fourth invention for solving the above-mentioned problem, which is a program for causing a computer to execute an operational control method of a wireless base station in a wireless communication system including an administration-object wireless base station having a specific identifier and an operational administration apparatus for making an operational administration for a system, is characterized in including the processes of: acquiring the specific identifier from a wireless frame; and notifying the specific identifier to the operational administering apparatus in order to detect existence of the unjust wireless station.

The thirty-fifth invention for solving the above-mentioned problem, which is a program for causing a computer to execute an operational control method of a wireless communication terminal in a wireless communication system including an administration-object wireless base station having a specific identifier and an operational administering apparatus for making an operational administration for a system, is characterized in including the processes of: acquiring the specific identifier from a wireless frame; and notifying the specific identifier to the operation administering apparatus in order to detect existence of the unjust wireless station.

An operation of the present invention will be described. The wireless station, being an object of administration, searches a wireless space over a plurality of frequency channels and acquires the BSS identifier, being an ID specific to each base station, and a frame transmission source identifier from the frame propagating through a space, and the operation administering apparatus compares this acquired BBS identifier with the BSS identifier of the base station registered as the base station that is an object of administration, thereby to detect the unjust wireless station. Further, the operation administering apparatus employs the acquired frame transmission source identifier, thereby to determine its classification and its producer as well. In addition hereto, it notifies existence of this unjust wireless station to the administration-object (normal) wireless base station, the administration-object terminal, the switching apparatus, etc., and instructs them for scrapping the frame from the unjust wireless station and disconnecting communication therewith, and so on, thereby enabling a measure for making communication with the unjust wireless station impossible.

### [EFFECTS OF THE INVENTION]

In accordance with the monitor system of the present invention, a falsehood etc. by an unjust user etc. is not permitted and it becomes possible to detect the unjust base station because the BSS identifier, being an identifier specific to each wireless station, is acquired from the frame that the unjust wireless station sends out to the wireless space to specify the unjust wireless station based upon this BSS identifier. Further, it becomes possible to investigate the unjust wireless station after narrowing the scope thereof down because an organization name indicating the producer of the above unjust wireless station is determined from one part of the BSS identifier.

Further, the frame transmission source identifier of the terminal having a connection with the unjust wireless station is acquired, the above frame transmission source identifier is set for a wire LAN switch, and the frame is scrapped in a case where the transmission source identifier of the frame that goes through the above wire LAN switch coincides therewith, thereby making it possible to hinder communication between the terminal having a connection with the unjust wireless station and a node within a wire net.

### [BRIEF DESCRIPTION OF THE DRAWINGS]

[Fig. 1] Fig. 1 shows a wireless LAN monitor system to which the present invention applies.
[Fig. 2] Fig. 2 shows a functional block of each component of the wireless LAN monitor system of an embodiment 1 and an embodiment 2.
[Fig. 3] Fig. 3 shows a process flow of the wireless LAN monitor system of the embodiment 1 and the embodiment 2.
[Fig. 4] Fig. 4 shows a process flow of the operation administering apparatus in the process flow of the wireless LAN monitor system of the embodiment 1 and the embodiment 2.
[Fig. 5] Fig. 5 shows a process flow of the operation administering apparatus in the process flow of the wireless LAN monitor system of the embodiment 1 and the embodiment 2.
[Fig. 6] Fig. 6 shows an example illustrating a connection/installation of the administration-object AP and the terminal, and of the unjust AP and the terminal.
[Fig. 7] Fig. 7 shows an example illustrating an installation location of the administration-object AP and the SW.
[Fig. 8] Fig. 8 shows an example of various kinds of information lists that the operation administering apparatus retains.
[Fig. 9] Fig. 9 shows an example illustrating the installation location of the SW and the administration-object AP, and the neighborhood of the unjust AP.
[Fig. 10] Fig. 10 shows a process flow of the wireless LAN monitor system of an embodiment 3.
[Fig. 11] Fig. 11 shows a functional block of each component of the wireless LAN monitor system of the embodiment 3.
[Fig. 12] Fig. 12 shows a process flow of the operation administering apparatus in the process flow of the wireless LAN monitor system of the embodiment 3.
[Fig. 13] Fig. 13 shows a process flow of the operation administering apparatus in the process flow of the wireless LAN monitor system of the embodiment 3.
[Fig. 14] Fig. 14 shows an example of various kinds of information lists that the operation administering apparatus of the embodiment 3 retains.
[Fig. 15] Fig. 15 shows a functional block of each component of the wireless LAN monitor system of the embodiment 4.
[Fig. 16] Fig. 16 shows an example of the company ID list to be retained by the operation administering apparatus of the embodiment 4.
[Fig. 17] Fig. 17 shows a process flow of the wireless LAN monitor system of an embodiment 5.
[Fig. 18] Fig. 18 shows a functional block of each component of the wireless LAN monitor system of the embodiment 5.
[Fig. 19] Fig. 19 shows an example of the receivable BSS identifier list B to be retained by the operation administering apparatus of the embodiment 5.
[Fig. 20] Fig. 20 shows a process flow of the operation administering apparatus in the process flow of the wireless LAN monitor system of the embodiment 5.
Fig. 21] Fig. 21 is a process flow of the operation administering apparatus in the process flow of the wireless LAN monitor system of the embodiment 5.

### [DESCRIPTION OF NUMERALS]

100 wireless LAN operation administering apparatus
101 administration-object AP list (BSS identifier)
102 receivable BSS identifier list
103 unjust AP list
104 unjust ad-hoc list
105 unjust AP utilization terminal list
106 administration-object AP list (AP identifier)
107 administration-object terminal list (terminal identifier)
108 operational processor
109 AP installation position list
110 SW installation position list
111 transmission/reception section
112 unjust AP detection terminal list
113 monitor process executor
114 frame transmission source identifier list
115 unjust AP detection AP list
116 company ID list
200 display
201 display section
202 transmission/reception section
300 administration-object wireless LAN access point
301 wire transmission/reception section
302 BSS identifier storage
303 unjust wireless station list
304 wireless transmission/reception section
305 frame transmission source identifier list
306 receivable BSS identifier list
307 retrieval process executor
308 filtering identifier storage
309 unjust wireless station SSID storage
400 administration-object wireless LAN client terminal
401 wireless transmission/reception section
402 retrieval process executor
403 receivable BSS identifier list
404 frame transmission source identifier list
405 message reception/display section
406 belonging BSS identifier storage
407 receivable BSS identifier list
500 unjust wireless station
501 wireless LAN client terminal configuring an ad-hoc net
502 wireless LAN client terminal configuring an ad-hoc net
503 unjust wireless LAN access point (infra mode)
504 unjust wireless LAN terminal (ad-hoc mode)
600 wire LAN switch
601 transmission/reception section
602 operational processor
603 filtering identifier storage

### [BEST MODE FOR CARRYING OUT THE INVENTION]

Next, the embodiments of the present invention will be explained in details by making a reference to the accompanied drawings. Fig. 1 is a view illustrating a configuration of the wireless LAN monitor system to which the present invention applies. It is configured of an operation administering apparatus 100 for making an operational administration for the wireless LAN, a display 200 for displaying operational administration information, an AP 300 that is an object of administration (being an access point and yet a wireless base station), a wireless communication terminal 400 that is an object of administration (hereinafter, simply referred to as a terminal), a switch (SW) 600 for connecting the AP and the wire net, and an unjust wireless station 500 that is not an object of administration. The unjust wireless station 500 exists as one of the ad-hoc net to which administration-object client terminal companions 501 and 502 are connected, an AP 503 (hereinafter, referred to as an unjust AP), being not an object of administration, which operates in an infrastructure mode and a terminal 504 connected to the wire net that operates in an ad-hoc mode, or as a combination thereof.

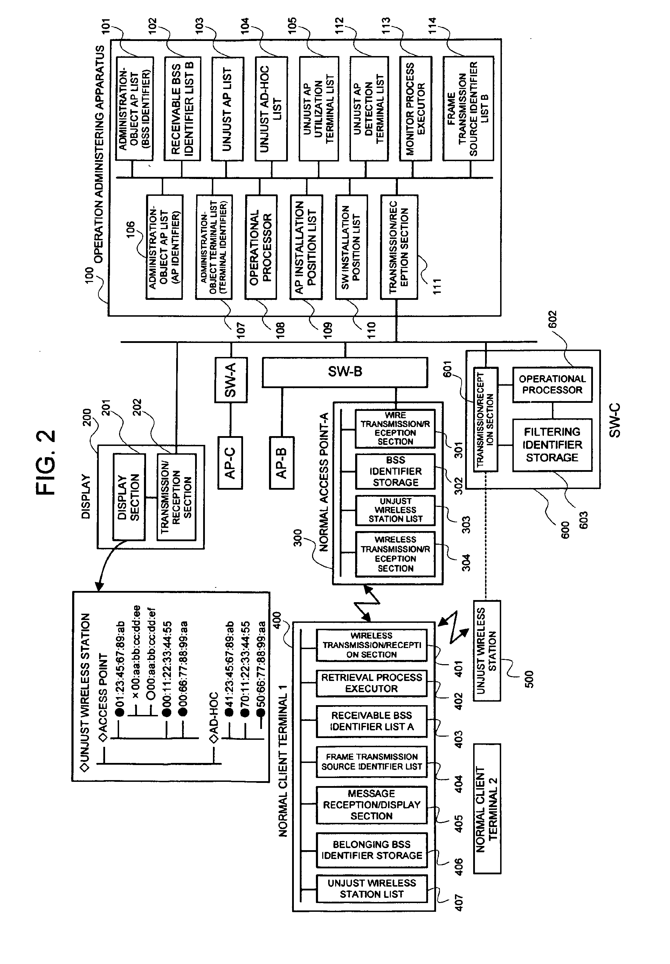

Fig. 2 is a view illustrating a functional block of each component of the wireless LAN monitor system associated with the present invention. The operation administering apparatus 100 is configured of an administration-object AP list (BSS identifier) 101 for filing information for identifying each interface of the administration-object AP, a receivable BSS identifier list B 102 for filing the receivable BSS identifier acquired from the terminal that is not an object of administration, an unjust AP list 103 for filing information of the unjust AP, an unjust ad-hoc list 104 for filing information of the unjust ad-hoc, an unjust AP utilization terminal list 105 for filing information of the terminal utilizing the unjust AP, an unjust AP detection terminal list 112 for filing information of the terminal having detected the unjust AP, an administration-object AP list (AP identifier) 106 for filing information for identifying the administration-object AP, an administration-object terminal list (terminal identifier) 107 for filing information for identifying the administration-object terminal, an operational processor 108 for performing an operational process, an AP installation position list 109 for filing installation position information of the AP, an SW installation position list 110 for filing installation position information of the SW, a transmission/reception section 111 for making communication with the other components, a monitor process executor 113 for taking a monitoring control, and a frame transmission source identifier list B 114 for filing frame transmission source identifier information from the terminal.

The display 200 is configured of a display section 201 for displaying operational administration information, and a transmission/reception section 202 for making communication with the other components. The AP 300 is configured of a wire transmission/reception section 301 for making communication with the other components in the wire side, a BSS identifier storage 302 for filing the BSS identifier allotted to the above AP 300, an unjust wireless station list 303 for filing information of the unjust wireless station, and a wireless transmission/reception section 304 for making communication with the other component in the wireless side.

The administration-object client terminal 400 is configured of a wireless transmission/reception section 401 for making communication with the AP, a retrieval process executor 402 for searching the wireless LAN that exists around the administration-object client terminal, a receivable BSS identifier list A 403 for filing BSS identifier information, being a retrieval result, a frame transmission source identifier list 404 for filing the frame transmission source identifier, being a retrieval result, a message reception/display section 405 for receiving/displaying a message that is notified from the other components, a belonging BSS identifier storage 406 for filing the BSS identifier of the AP to which the above client terminal belongs, and an unjust wireless station list 407 in which the identifier list for excluding the unjust wireless station from the connection destination is filed.

The SW 600 is configured of a transmission/reception section 601 for making communication with the other components, an operational processor 602 for performing an operation process, and a filtering identifier storage 603 for filing the identifier for identifying an object of filtering in making a packet filtering.

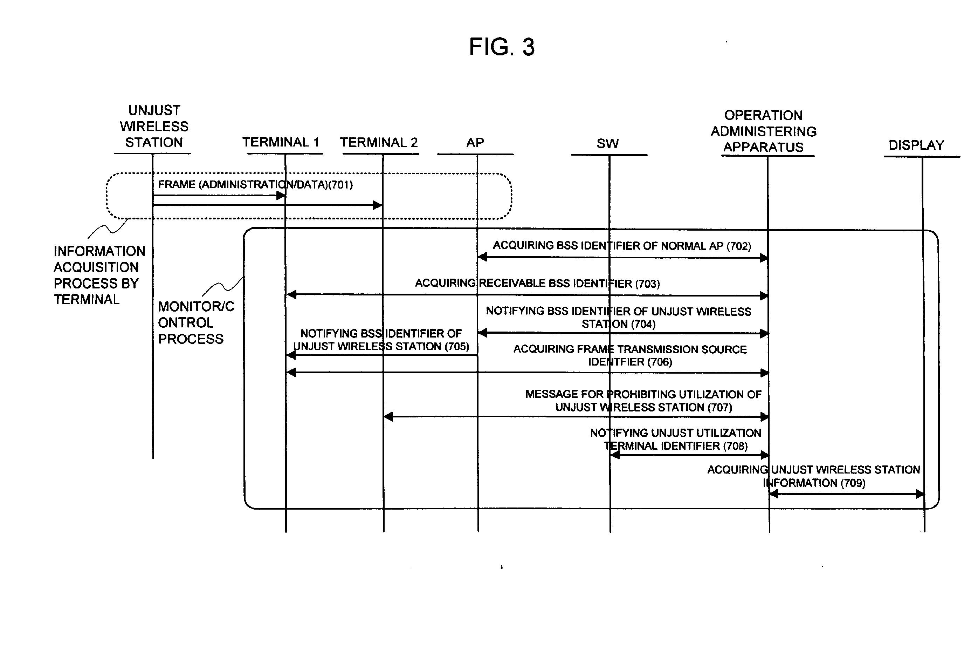

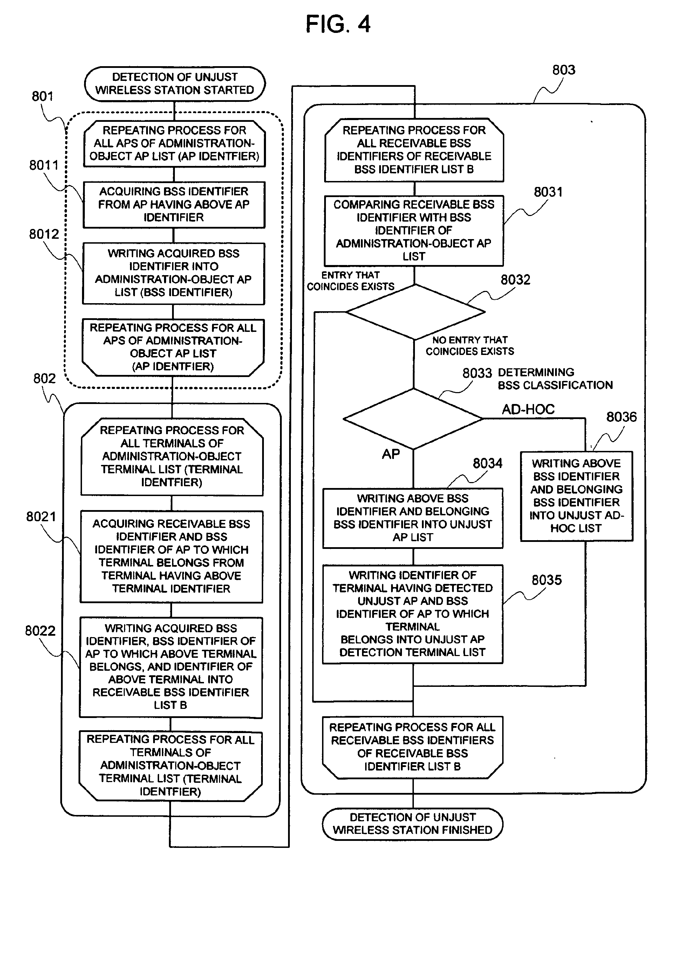

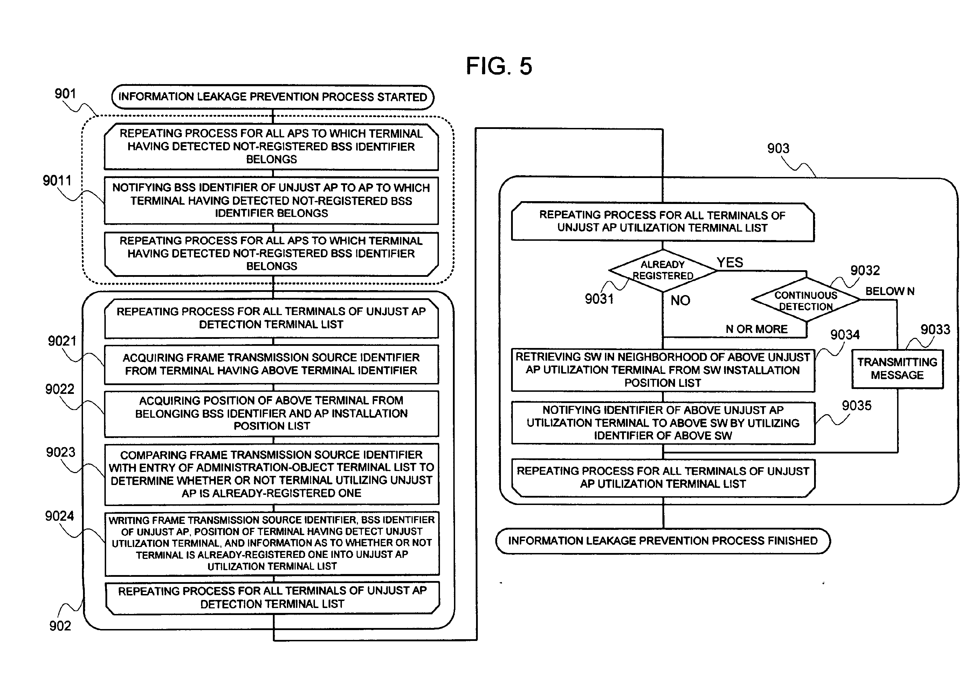

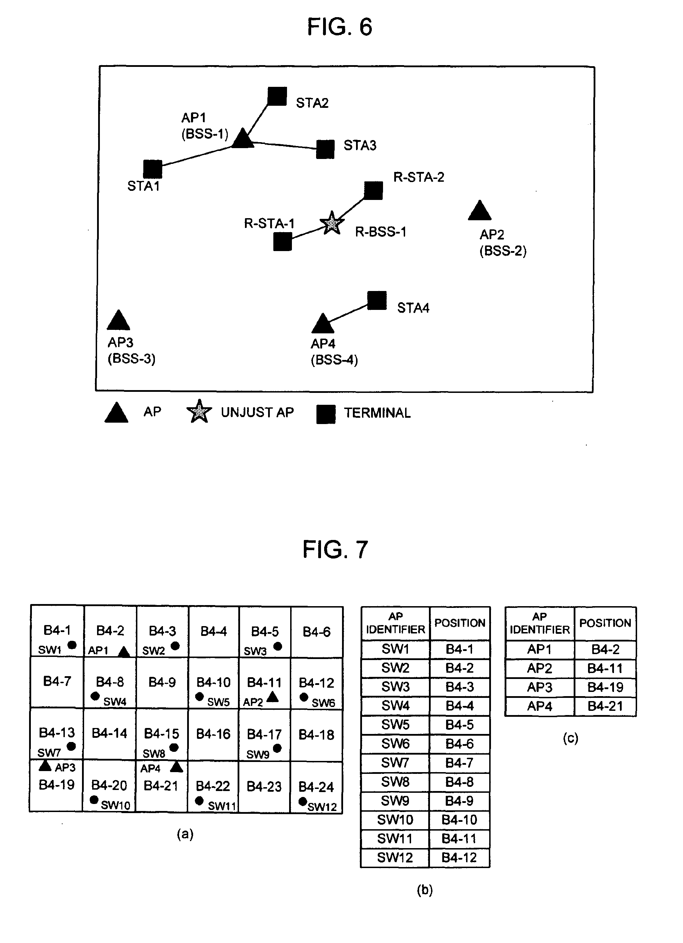

Fig. 3 is a view illustrating a process flow of the wireless LAN monitor system to which the present invention applies. The process is divided into two independent processes of an information acquisition process by the administration-object terminal, and a monitoring/control process based upon information by the operation administering apparatus. The affiliated process in which the administration-object terminal operates under an instruction from the operation administering apparatus is also possible; however they are explained as the independent process hereinafter, respectively. Further, Fig. 4 and Fig. 5 are views illustrating an operation within the operation administering apparatus in the process flow. Fig. 6 shows an example of the case that the administration-object AP (a triangular mark), the unjust AP (a star mark), and the terminal (a square mark) coexist. A line drawn between the terminal and the administration-object AP, or a line between the terminal and the unjust AP signifies a connection relation between the terminal and the AP. Fig. 7 (a) is a view illustrating a physical arrangement of the administration-object AP and the SW, in which an example of separating a region into a plurality of blocks (B4-1 to B4-24) is shown, and Fig. 7 (b) and (c) are a view illustrating the installation position of the SW and the AP by block unit, respectively.

The retrieval process executor 402 of the administration-object client terminal regularly initiates information acquisition of the surrounding wireless environments via the wireless transmission/reception section 401. The information acquisition is made not only for a frequency channel that the administration-object client terminal uses at its time point, but also for the other channels. The administration-object AP and the unjust wireless station transmit the frame for administration and the frame of a data (701 of Fig. 3), so the administration-object client terminal acquires these frames, and files the BSS identifier acquired from the frame into the receivable BSS identifier list A 403. The BSS identifier acquired from the frame, the identifier of its frame transmission source apparatus, and information for identifying whether its frame is a frame from the terminal to the AP, or a frame from the AP to the terminal are filed into the frame transmission source identifier list 404.

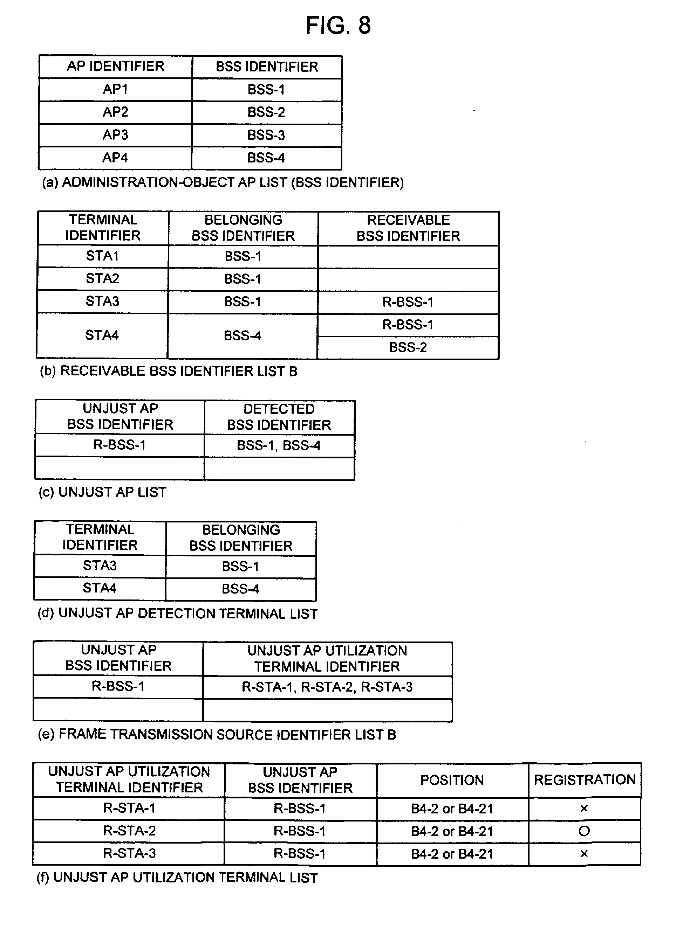

The operation administering apparatus acquires the BSS identifier of the administration-object AP (702 of Fig. 3 and 801 of Fig. 4 (The details of this 801 will be later described in the section of the embodiment)). Additionally, in Fig. 3, the administration-object AP is shown as a normal AP, and it is assumed that the situation is identical in the other figures as well. The monitor process executor 113 requests the BSS identifier of the AP described in the administration-object AP list (AP identifier) 106 (Fig. 8 (a)). The AP gives information of the BSS identifier storage 302 to the operation administering apparatus as a reply, and the operation administering apparatus files the acquired information into the administration-object AP list (BSS identifier) 101. Additionally, it is acceptable that the administration-object AP list (BSS identifier) is prepared in advance and retained by the operation administering apparatus.

Next, the receivable BSS identifier is acquired (703 of Fig. 3 and 802 of Fig. 4 (The details of this 802 will be later described in the section of the embodiment)). The monitor process executor 113 requests the receivable BSS identifier of the terminal described in the administration-object terminal list (terminal identifier) 107. The administration-object terminal gives information of the receivable BSS identifier list A 403 and information of the belonging BSS identifier storage 406 to the operation administering apparatus as a reply, and the operation administering apparatus files the acquired information into the receivable BSS identifier list B 102 (Fig. 8 (b)).

The monitor process executor 113 prepares the unjust AP list, the unjust ad-hoc list, and the unjust AP detection terminal list (803 of Fig. 4 (The details of this 803 will be later described in the section of the embodiment)). The monitor process executor 113 compares the BSS identifier of the administration-object AP list (BSS identifier) 101 with the BSS identifier of the receivable BSS identifier list B 102, and extracts the BSS identifier that does not exists in the administration-object AP list (BSS identifier) 101. In a case where the BSS classification to be included in the BSS identifier is an AP, it files the receivable BSS identifier, and the BSS identifier of the AP to which the terminal having detected the unjust AP belongs into the unjust AP list 103 (Fig. 8 (c)) as an unjust AP BSS identifier and a detection BSS identifier respectively. Further, it files information of the administration-object terminal having detected the above unjust AP into the unjust AP detection terminal list 112 (Fig. 8 (d)). In a case where the BSS classification is an ad-hoc, it files the receivable BSS identifier and the BSS identifier of the AP to which the administration-object terminal having detected the unjust ad-hoc belongs into the unjust ad-hoc list 104. The above process enables the unjust AP and the unjust ad-hoc to be detected.

Next, hereinafter, the process will be explained of, by utilizing information of the unjust AP and the unjust ad-hoc detected with the above-mentioned technique, detecting the terminal making a connection with this unjust AP etc., further, to determine whether or not the detected terminal is a terminal that is an object of administration, and to separate the unjust one.

The monitor process executor 113 notifies information described in the unjust AP list 103 to the administration-object AP to which the terminal having detected the unjust AP belongs (704 of Fig. 3 and 901 of Fig. 5). The administration-object AP having received an notification files the information into the unjust wireless station list 303, and notifies the information of the unjust wireless station to the administration-object client terminal having a connection therewith regularly or by means of an instruction from the outside (705 of Fig. 3). The administration-object terminal having received a notification displays the information of the unjust wireless station in the message reception/display section 405, notifies the fact that the unjust wireless station exists to the user, and simultaneously therewith, files the information of the unjust wireless station into the unjust wireless station list 407. The administration-object terminal makes it a rule not to make a connection with the wireless station (base station or terminal) registered to the unjust wireless station list in making a connection thereafter.

Next, the frame transmission source identifier is acquired (706 of Fig. 3 and 902 of Fig. 5 (The details of this 902 will be later described in the section of the embodiment)). The monitor process executor 113 requests of the administration-object terminal described in the unjust AP detection terminal list 112 ((d) of Fig. 8) the transmission source identifier (the identifier of the terminal utilizing the unjust AP: hereinafter, referred to as an unjust utilization terminal identifier) of the frame that flows from the terminal to the AP. The administration-object terminal acquires desired information from the frame transmission source identifier list 404, and gives it to the operation administering apparatus as a reply. The operation administering apparatus files the acquired information into the frame transmission source identifier list B 114 ((e) of Fig. 8).

The operation administering apparatus acquires the BSS identifier of the administration-object terminal having detected the unjust AP from the unjust AP BSS identifier of the frame transmission source identifier list B 114 ((e) of Fig. 8) and the unjust AP list ((c) of Fig. 8), and files a positional relation of the administration-object AP to which the administration-object terminal having detected the unjust utilization terminal identifier and the above unjust utilization terminal from the AP installation position list 109 ((c) of Fig. 7) and the administration-object AP list (BSS identifier) 101 belongs into the unjust AP utilization terminal list 105 ((f) of Fig. 8). Further, it specifies from the administration-object terminal list 107 whether or not the unjust utilization terminal identifier is an identifier of the administration-object terminal, and files its identifier into the unjust AP utilization terminal list 105 ((f) of Fig. 8). Additionally, in (f) of Fig. 8, it is assumed that R-STA-2 is a terminal that is an object of administration.

The monitor process executor 113 performs a measure against the unjust AP utilization terminal (903 of Fig. 5 (The details of this 903 will be later described in the section of the embodiment)). In a case where the unjust AP utilization terminal is an object of administration, if the continuous detection number of times is below N (N is a natural number), the monitor process executor 113 notifies a message for prohibiting utilization of the unjust AP (707 of Fig. 3) to the above unjust AP utilization terminal. In a case where the unjust AP utilization terminal is an object of administration and yet in a case where the continuous detection number of times is N or more, or in a case where it is not an object of administration, it retrieves the SW in the neighborhood of the unjust AP utilization terminal, and notifies the identifier of the unjust AP utilization terminal to the above SW (708 of Fig. 3).

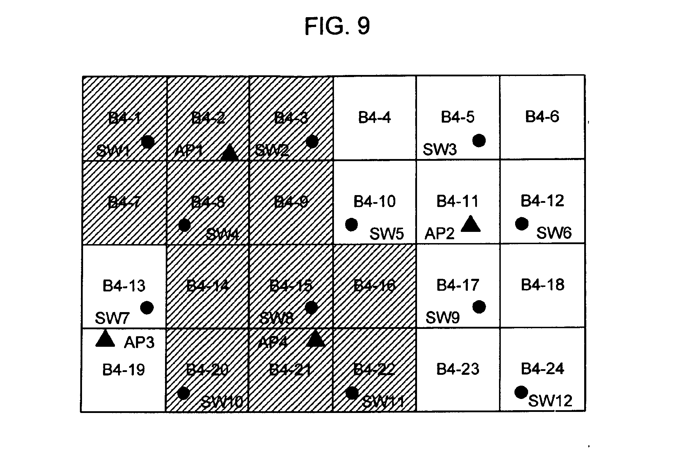

With retrieving the SW in the neighborhood, for example, it is assumed that B4-2 and B4-21 are acquired from positional information of the unjust AP utilization terminal list ((f) of Fig. 8), the blocks (B4-1 to B4-3, B4-7 to B4-9, B4-14 to B4-16, and B4-20 to B4-22) around its position are located in the neighborhood in Fig. 7 (a), and SW 1, SW 2, SW 4, SW 8, SW 10 and SW 11 installed therein (a hatch portion of Fig. 9) are an object pf notification, respectively.

The message reception/display section 405 of the administration-object terminal having received the message for prohibiting utilization of the unjust AP displays the message from the operation administering apparatus. Further, the SW having received the identifier of the unjust AP utilization terminal files its identifier into the filtering identifier storage 603, thereafter, compares the identifier with the transmission source identifier of the frame that goes through the transmission/reception section 601, and in a case where its value coincides with the value filed in the filtering identifier storage 603, scraps its frame.

The display 200 periodically acquires the unjust AP list 103, the unjust ad-hoc list 104, and the unjust AP utilization terminal list 105 of the operation administrating apparatus (709 of Fig. 3), and displays information of the unjust wireless station in the display section 201. In displaying the unjust wireless station, it is classified BSS classification by BSS classification, and the BSS identifier is displayed under each classification. With the AP, it is further hierarchized under the BSS identifier, and the identifier of the terminal utilizing the unjust AP is described. At its moment, the code (○ ×) for identifying whether or not the above terminal is an object of monitoring is affixed (Fig. 2) .

### [Embodiment 1]

Next, the foregoing best embodiment will be explained more specifically as an example. This embodiment 1 is an example in which a detection of the unjust wireless station is carried out by the terminal. The configuration of the wireless LAN monitor system and each component is identical to the foregoing. Fig. 3 is a view illustrating a process flow of the wireless LAN monitor system to which the present invention applies. The process is divided into two independent processes of an information acquisition process by the administration-object terminal, and a monitoring/control process based upon information by the operation administering apparatus. The affiliated process in which the administration-object terminal operates under an instruction from the operation administering apparatus is also possible; however they are explained as the independent process hereinafter, respectively.

Further, Fig. 4 and Fig. 5 are views illustrating an operation of the operation administering apparatus in the process flow. Fig. 6 shows an example of the case that the administration-object AP, the unjust AP, and the terminal co-exist. Fig. 7 (a) is a view illustrating a physical arrangement of the administration-object AP and the SW, in which an example of separating a region into a plurality of blocks (B4-1 to B4-24) is shown, and Fig. 7 (b) and (c) are a view illustrating the installation position of the SW and the AP by block unit, respectively.

The retrieval process executor 402 of the administration-object client terminal regularly initiates information acquisition of the surrounding wireless environments via the wireless transmission/reception section 401. The information acquisition is made not only for a frequency channel that the administration-object client terminal uses at its time point, but also for the other channels. The administration-object AP and the unjust wireless station transmit a beacon frame, a probe frame, and a data frame (701 of Fig. 3), so the administration-object client terminal acquires these frames, and files the BSSID acquired from the frame into the receivable BSS identifier list A 403. The administration-object client terminal files into the frame transmission source identifier list 404 the terminal BSSID acquired from the frame, an MAC address of the frame transmission source apparatus, and a "To DS" (DS: Distribution system, that is, it signifies a net) region and a "from DS" region for identifying whether its frame is a frame from the terminal to the AP or a frame from the AP to the terminal.

At first, the operation administering apparatus acquires the BSSID of the administration-object AP (702 of Fig. 3 and 801 of Fig. 4). The monitor process executor 113 request the BSSID of an IP address of the administration-object AP described in the administration-object AP list (AP identifier) 106 (8011 of Fig. 4). The administration-object AP gives the BSSID filed in the BSS identifier storage 302 to the operation administering apparatus as a reply, and the operation administering apparatus files the acquired BSSID into the administration-object AP list (BSS identifier) 101 (8012 of Fig. 4). Additionally, it is acceptable that the administration-object AP list (BSS identifier) is prepared in advance and is retained by the operation administering apparatus.

Next, the receivable BSSID is acquired (703 of Fig. 3 and 802 of Fig. 4). The monitor process executor 113 requests the receivable BSSID of the administration-object terminal described in the administration-object terminal list (terminal identifier) 107. The administration-object terminal gives the BSSID of the receivable BSS identifier list A 403 and the BSSID of the belonging BSS identifier storage 406 to the operation administering apparatus as a reply (8021 of Fig. 4), and the operation administering apparatus files the two acquired BSSIDs into the receivable BSS identifier list B 102 (8022 of Fig. 4).

The monitor process executor 113 prepares the unjust AP list, the unjust ad-hoc list, and the unjust AP detection terminal list (803 of Fig. 4). It compares the BSSID of the administration-object AP list (BSS identifier) 101 with the receivable BSSID described in the receivable BSS identifier list B 102 (8031 of Fig. 4), and extracts the BSSID that does not exist in the administration-object AP list (BSS identifier) 101 (8032 of Fig. 4).

In a case where a "universal/local bit (IEEE standard 802) to be included in this BSSID is 0 (zero) (the "AP" of 8033 of Fig. 4), the BSSID of the unjust AP and the BSSID of the AP to which the administration-object terminal having detected the unjust AP belongs are filed into the unjust AP list 103 (8034 and 8035 of Fig. 4). In a case where a "universal/local bit is 1 (one) (the "ad-hoc" of 8033 of Fig. 4), the receivable BSSID and the BSSID of the AP to which the administration-object terminal having detected the unjust ad-hoc belongs are filed into the unjust ad-hoc list 104 (8036 of Fig. 4).

The above process allows the unjust AP to be detected. The process becomes necessary of preventing information from leaking from the unjust AP detected in such a manner, and in this moment, the following four cases are considered and the information leakage prevention measure differs for each case of these, so each case of these will be explained below as an embodiment 2.

### [Embodiment 2]

The so-called four cases mentioned above are (1) the case that the administration-object terminal is connected to the administration-object AP, (2) the case that the administration-object terminal is connected to the unjust AP, (3) the case that the unjust terminal is connected to the unjust AP, and (4) the case that the unjust terminal is connected to the administration-object AP. At first, the information leakage prevention measure in the case of (1) will be described.

The monitor process executor 113 notifies the BSSID of the unjust AP described in the unjust AP list 103 to the AP to which the administration-object terminal having detected the unjust AP belongs (704 of Fig. 3, and 901 and 9011 of Fig. 5). The administration-object AP having received an notification files the BSSID of the unjust AP into the unjust wireless station list 303, and notifies the BSSID of the unjust AP to the administration-object client terminal having a connection therewith regularly or by means of an instruction from the outside (705 of Fig. 3). The terminal having received a notification displays the BSSID of the unjust AP in the message reception/display section 405, notifies the fact that the unjust AP exists to the user, and simultaneously therewith, files the BSSID of the unjust AP into the unjust wireless station list 407. The administration-object terminal makes it a rule not to make a connection with the wireless station registered to the unjust wireless station list in making a connection thereafter.

Next, the frame transmission source identifier is acquired (706 of Fig. 3 and 902 of Fig. 5). The monitor process executor 113 requests of the administration-object terminal described in the unjust AP detection terminal list 112 ((d) of Fig. 8) a transmission source MAC address (an MAC address of the terminal utilizing the unjust AP: hereinafter, referred to as an unjust utilization terminal MAC address) of the frame that flows from the terminal to the AP. The administration-object terminal acquires the transmission source MAC address of the frame of which the value of the "To DS" region is 1 (one) from the frame transmission source identifier list 404, and gives it to the operation administering apparatus as a reply.

The operation administering apparatus files the acquired MAC address into the frame transmission source identifier list B 114 (9021 of Fig. 5). It acquires the BSSID of the administration-object terminal having detected the unjust AP from the unjust AP BSSID of the frame transmission source identifier list B 114 ((e) of Fig. 8) and the unjust AP list ((c) of Fig. 8), and files a positional relation of the AP to which the administration-object terminal having detected the unjust utilization terminal MAC address and the above unjust utilization terminal from the AP installation position list 109 ((c) of Fig. 7) and the administration-object AP list (BSS identifier) 101 belongs into the unjust AP utilization terminal list 105 ((f) of Fig. 8)(9022 of Fig. 5). Further, it specifies from the administration-object terminal list 107 whether or not the unjust utilization terminal MAC address is a MAC address of the administration-object terminal (9023 of Fig. 5), and files its address into the unjust AP utilization terminal list 105 ((f) of Fig. 8)(9024 of Fig. 5). Additionally, in (f) of Fig. 8, it is assumed that R-STA-2 is a terminal that is an object of administration.

Next, the information leakage prevention measures in the case that the administration-object terminal is connected to the unjust AP, being the case of (2), and in the case that the unjust terminal is connected to the unjust AP, being the case of (3), will be described. The monitor process executor 113 performs a measure against the unjust AP utilization terminal (903 of Fig. 5). In a case where the unjust AP utilization terminal is an object of administration ("yes" in 9031 of Fig. 5: it is the case of (2)), if the continuous detection number of times is below N, the monitor process executor 113 notifies the message for prohibiting utilization of the unjust AP to the above unjust AP utilization terminal (707 of Fig. 3 and 9032 and 9033 of Fig. 5). In a case where the unjust AP utilization terminal is an object of administration and yet in a case where the continuous detection number of times is N or more, or in a case where it is not an object of administration (it is the case of (3), it retrieves the SW in the neighborhood of the unjust AP utilization terminal (9034 of Fig. 5), and notifies the MAC address of the unjust AP utilization terminal to the above SW (708 of Fig. 3) (9035 of Fig. 5).

With retrieving the SW in the neighborhood, for example, it is assumed that B4-2 and B4-21 are acquired from positional information of the unjust AP utilization terminal list ((f) of Fig. 8), the blocks (B4-1 to B4-3, B4-7 to B4-9, B4-14 to B4-16, and B4-20 to B4-22) around its position are located in the neighborhood in Fig. 7 (a), and SW 1, SW 2, SW 4, SW 8, SW 10 and SW 11 installed therein (a mesh portion of Fig. 9) are an object of notification, respectively.

The message reception/display section 405 of the administration-object terminal having received the message for prohibiting utilization of the unjust AP displays the message from the operation administering apparatus. Further, the SW having received the MAC address of the unjust AP utilization terminal files its MAC address into the filtering identifier storage 603, thereafter, compares the MAC address with the transmission source MAC address of a frame that goes through the transmission/reception section 601, and in a case where its value coincides with the value filed in the filtering identifier storage 603, scraps its frame.

The display 200 periodically acquires the unjust AP list 103, the unjust ad-hoc list 104, and the unjust AP utilization terminal list 105 of the operation administering apparatus (709 of Fig. 3), and displays the BSSID of the unjust wireless station in the display section 201. In displaying the unjust wireless station, it is classified BSS classification by BSS classification, and the BSSID is displayed under each classification. With the AP, it is further hierarchized under the BSSID, and the MAC address of the terminal utilizing the unjust AP is described. At its moment, the code (○ ×) for identifying whether or not the above terminal is an object of monitoring is affixed (Fig. 2).

The case that the unjust terminal is connected to the administration-object AP, being the case of (4), will be described. The transmission source address has been inserted into a data packet header and the BSSID of the administration-object AP is already known, so the MAC address of the terminal connected to the administration-object AP is understood. Thus, comparing this MAC address with the address of the terminal registered to the operation administering apparatus makes it possible to specify whether or not it is an unjust terminal. Thereupon, taking a measure for incapacitating the unjust terminal connected to the administration-object AP from communicating can prevent the information leakage from occurring. As an example for this end, as mentioned previously, there exist the method of scrapping the frame by making a filtering in the SW, the method of instructing the administration-object AP to disconnect a circuit, the method of scrapping the frame by making a filtering by this AP itself, or the like.

Additionally, the above-mentioned determination of the administration-object AP is enabled by utilizing the BSSID that is a specific identifier, and the SSID, which is easily falsified, does not enable the unjust AP or terminal to be specified, thereby making it difficult to take the information leakage prevention measure corresponding to each of the above-mentioned (1) to (4), and the technique of employing the SSID in the above-mentioned patent document 1 is not practical.

In the previous embodiment 1, only the BSSID was acquired as information of the unjust wireless station, displayed in the display, and notified to the administration-object AP; however it is acceptable that the SSID is also acquired together with the BSSID and displayed, and notified. Further, it was explained that the BSSID of the unjust wireless station was notified to the administration-object terminal via the administration-object AP; however it may be directly notified to the administration-object terminal from the operation administering apparatus.

Further, in the embodiment 1, the detection result was displayed in the display; however the detection result is not displayed in the display, but may be notified to an administrator by utilizing a predetermined communication means. As the communication means, for example, a telephone, an electronic mail, etc, are thought. Further, it was described that, in the embodiment 1, all of the detection of the unjust wireless station, the notification of the detection result, and the control based upon the detection result were carried out; however, the system for executing one part of these, for example, only the detection of the unjust wireless station may be acceptable. Further, the system may be provided with the function that is capable of, by the user's setting, selectively executing one part or the entirety of the process.

### [Embodiment 3]

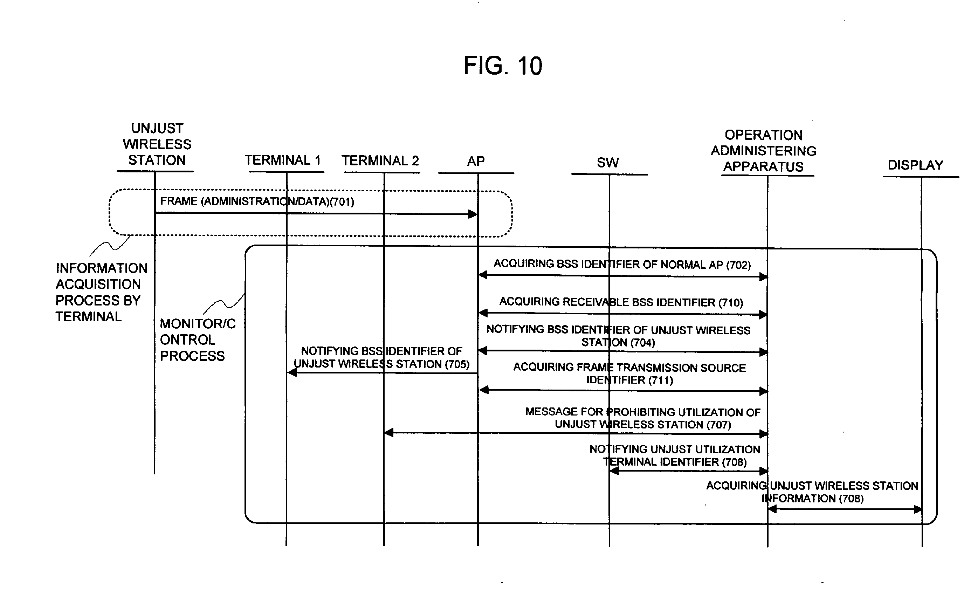

In the embodiment 1, the administration-object terminal detected the unjust wireless station; however it is also thought that the administration-object AP detects the unjust wireless station. Fig. 10 is a view illustrating a process flow of this embodiment. A difference with the process flow of the embodiment 1 lies in a point that acquisition of the receivable BSS identifier (710 of Fig. 10) and acquisition of the frame transmission source identifier (711 of Fig. 10) are carried out between the operation administering apparatus and the administration-object AP.

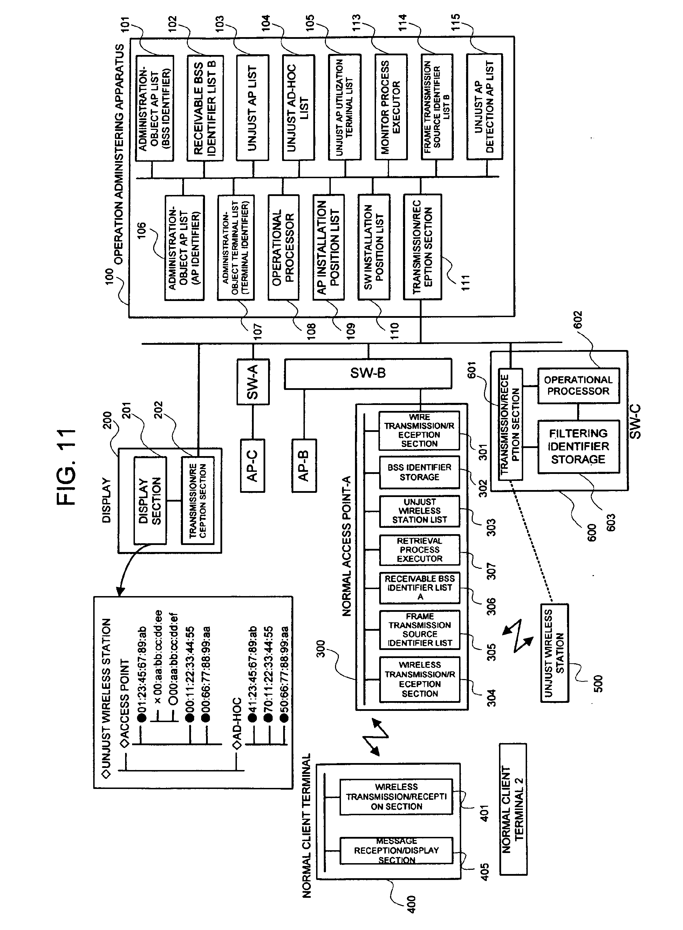

Fig. 11 is a view illustrating a functional block of each component of the wireless LAN monitor system associated with the embodiment 3. A difference with the functional block of the embodiment 1 lies in a point that the retrieval process executor 402, the receivable BSS identifier list A, and the frame transmission source identifier list 404, which existed in the administration-object terminal in the embodiment 1, fall into disuse, and a retrieval process executor 307, a receivable BSS identifier list A 306, and a frame transmission source identifier list 305 exist in the administration-object AP, and a point that the unjust AP detection terminal list 112 that existed in the operation administering apparatus, falls into disuse, and an unjust AP detection AP list 115 exists.

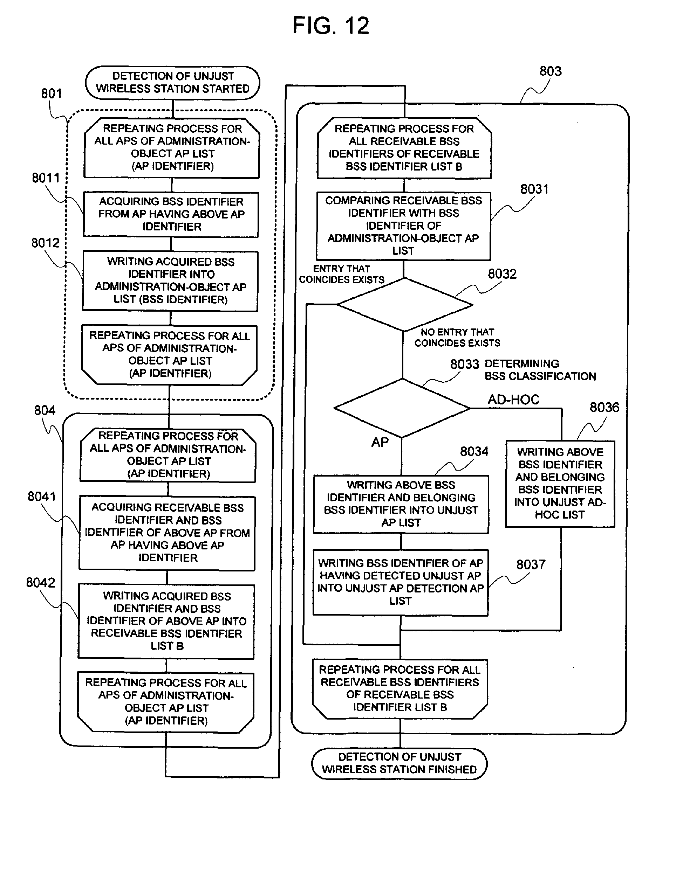

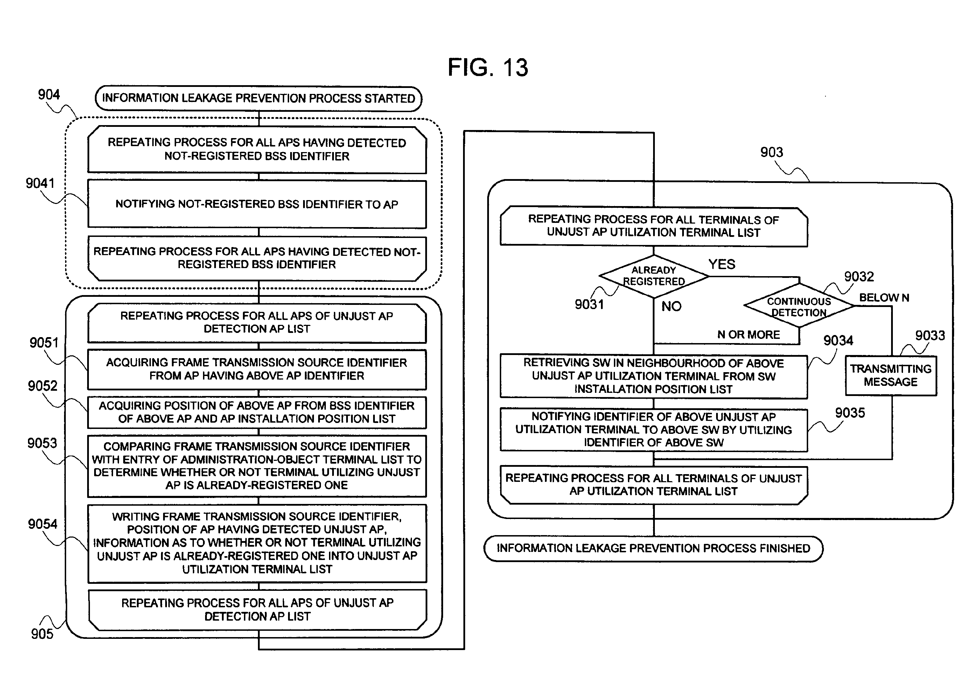

Each of Fig. 12 and Fig. 13 is a view illustrating an operation of the operation administering apparatus in the process flow, and identical codes are affixed to the identical portion to Fig. 4 and Fig. 5. A difference with the embodiment 1 lies in 804 and 803 of Fig. 12 and 905 of Fig. 13. In 804 of Fig. 12, the operation administering apparatus requests of each IP address of the administration-object AP described in the administration-object AP list the receivable BSSID and the BSSID of the above AP (8041 of Fig. 12), and outputs the acquired BSSID to the receivable BSS identifier list B 102 (8042 of Fig. 12) .

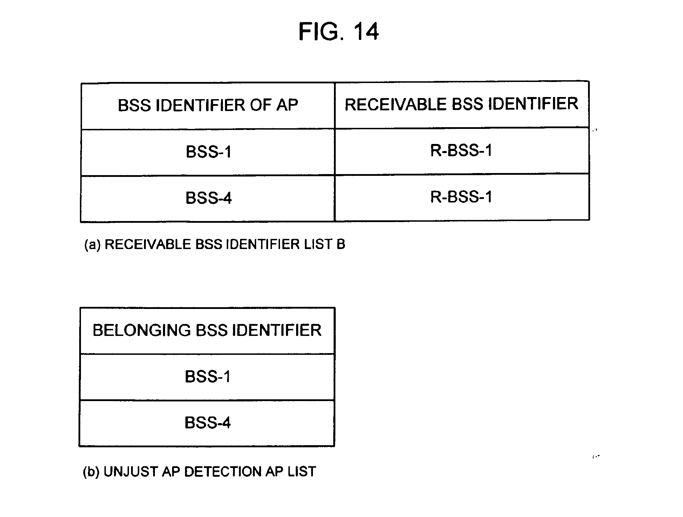

In 803 of Fig. 12, the operation administering apparatus compares the BSSID of the receivable BSS identifier list B with the BSS identifier of the administration-object AP list (BSS identifier) (8032 of Fig. 12), in a case where it is determined that it is an BSSID that is not included in the administration-object list and its BSS classification is an AP (8033 of Fig. 12), writes the above BSSID into the unjust AP list (8034, of Fig. 12), and further, writes the BSSID of the administration-object AP having detected the unjust AP into the unjust AP detection AP list (8037 of Fig. 12). Fig. 14 shows an example of the receivable BSS identifier list B and the unjust AP detection AP list.

Fig. 13, which shows an operation of the information leakage prevention process in this embodiment, is basically identical to Fig. 5, and the different portion will be explained. The operation administering apparatus notifies the BSSID of the unjust AP to the administration-object AP (904 of Fig. 13). And, it acquires the frame transmission source identifier from this AP (9051 of Fig. 13), and acquires a position of the AP from the BSSID of the above AP and the AP installation position list (9052 of Fig. 13). Next, it compares the frame transmission source identifier with an entry of the administration-object terminal list, determines whether the terminal utilizing the unjust AP is an already-registered one (9053 of Fig. 13), and writes the frame transmission source identifier, the position of the AP having detected the unjust AP, and information as to whether or not the terminal utilizing the unjust AP is an already-registered one into the unjust AP utilization terminal list (9054 of Fig. 13). A process 903 is identical to that of Fig. 5.

### [Embodiment 4]

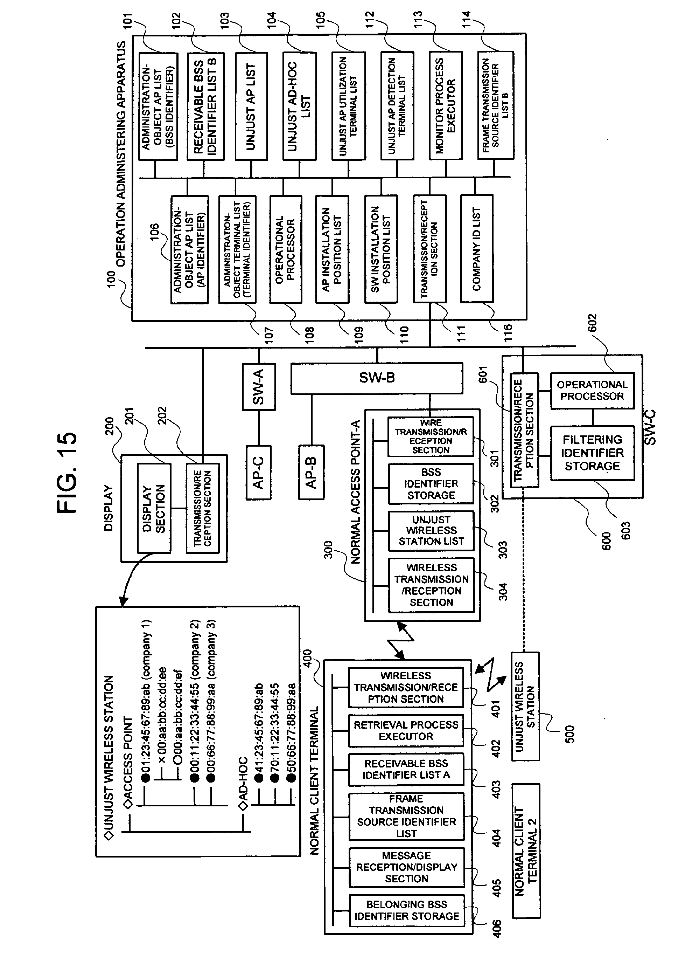

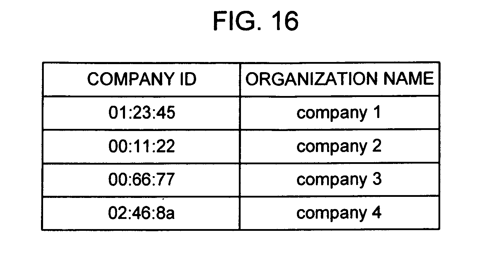

Next, the embodiment of affixing not only the BSSID but also a company name for displaying the unjust AP will be explained. In the previous embodiment 1, the BSSID was used for displaying the unjust AP; however it is also thought that, as a rule, an organization name of the producer of the above unjust AP that can be easily identified is affixed in addition to the BSSID of which identification is difficult for a person. Fig. 15 is a view illustrating an functional block of each component of the wireless LAN monitor system associated with embodiment 4. A difference in the functional block with the embodiment 1 lies in a point that a company ID list 116 is added to the operation administering apparatus. An example of the company ID list is shown in Fig. 16. The company ID assumes a three-byte value that is signified in a hexadecimal notation, and the organization name assumes a character-ring signifying the producer.

The display 200 acquires the company ID list in addition to the unjust AP list and the unjust ad-hoc list from the operation administering apparatus. The entry that coincides with the first three bytes of the BSSID of the acquired unjust AP list is retrieved from the company ID list because three bytes of the BSSID, beginning with the head, is a company ID. A vendor name obtained by retrieving in displaying the unjust AP is affixed following the BSSID.

Specifically, the BSSID of the unjust AP that is shown in Fig. 15 is 01:23:45:67:89:ab, 00:11:22:33:44:55, and 00:66:77:88:99:aa, respectively, and each three-byte company ID beginning with the head is 01:23:45, 00:11:22, and 00:66:77, respectively. With each company ID assumed to be a key, it is determined from Fig. 16 that the producer of each unjust AP is company 1, company 2, and company 3, respectively, of which the organization name is displayed in the display section. Additionally, in the explanation, the BSSID and the organization name were caused to correspond to each other within the display; however they may be caused to correspond in the operation administering apparatus side.

### [Embodiment 5]

Next, the embodiment will be described of, in a case where the unjust AP has appeared, setting the SSID identical to that of the unjust AP for the administration-object AP around the AP having detected the unjust AP. That is, the previous embodiment 1 is configured so that, by detecting an MAC address of the terminal connected to the unjust AP to set its MAC address for the SW, the frame from the terminal having made a connection with the unjust AP is scrapped in the SW; however it is also thought that the terminal, being not an object of administration, which tries to make a connection with the unjust AP, is caused to make a connection with the administration-object AP and the frame from its terminal, being not an object of administration, is scrapped in the administration-object AP.

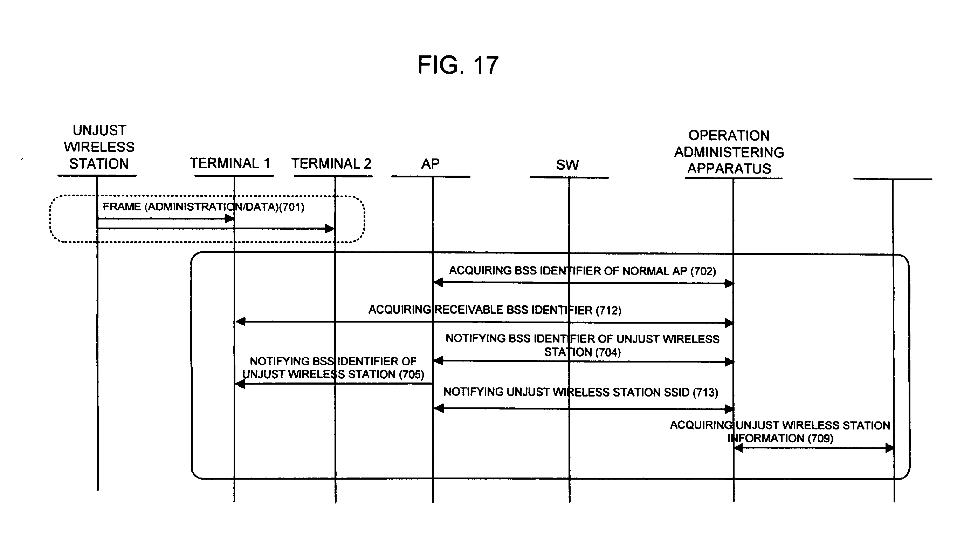

Fig. 17 is a view illustrating a process flow of the embodiment 5. A difference with the process flow of the embodiment 1 lies in a point that the acquisition 706 of the frame transmission source identifier that is carried out between the operation administering apparatus and the administration-object terminal, the message notification 707 of the unjust wireless station utilization prohibition that is carried out between the operation administering apparatus and the administration-object terminal having made a connection with the unjust AP, and the notification 708 of the unjust utilization terminal identifier that is carried out between the operation administering apparatus and the SW are deleted, and an unjust wireless station SSID notification 713 that is carried out between the operation administering apparatus and the administration-object AP is added.

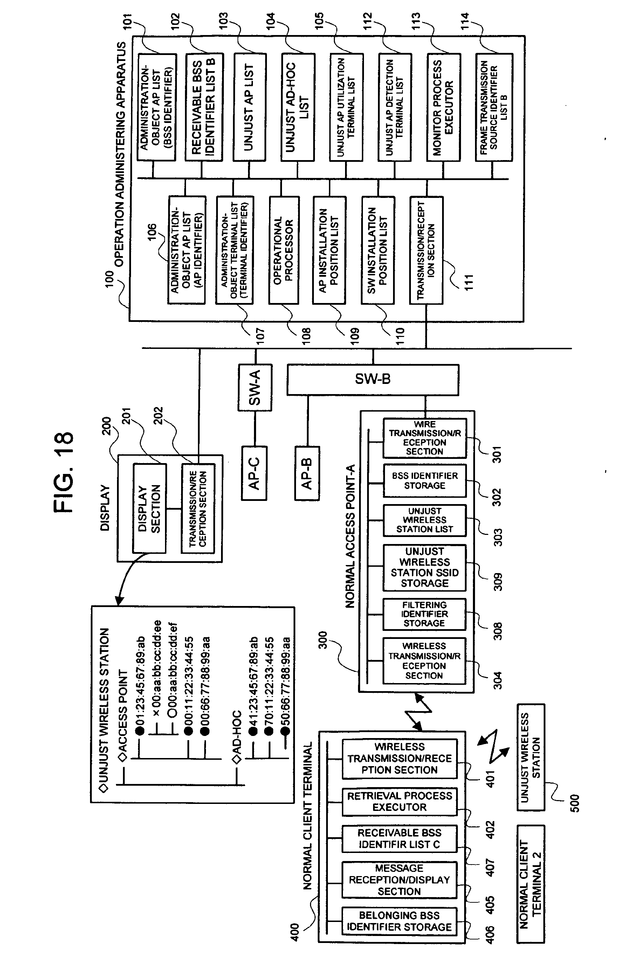

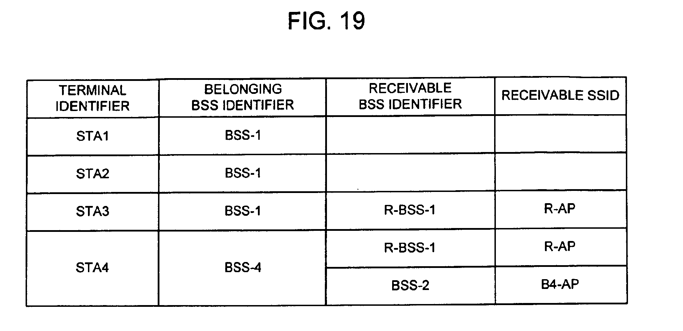

Fig. 18 is a view illustrating a functional block of each component of the wireless LAN monitor system associated with the embodiment 4. A difference with the functional block of the embodiment 1 lies in a point that the frame transmission source identifier list of the administration-object terminal is not necessitated, in a point that, in addition to the receivable BSSID, the SSID of the unjust wireless station having the above BSSID is also filed into the receivable BSS identifier list A 403 of the administration-object terminal, in a point that the SSID of the unjust wireless station is also filed into the receivable BSS identifier list B of the operation administering apparatus similarly (Fig. 19), and in a point that an unjust wireless station SSID storage 309 for filing the SSID of the unjust wireless station and a filtering identifier storage 308 for filing the MAC address of the terminal, being not an object of administration, which has a connection by using the SSID filed in the unjust wireless station SSID storage are added to the administration-object AP.

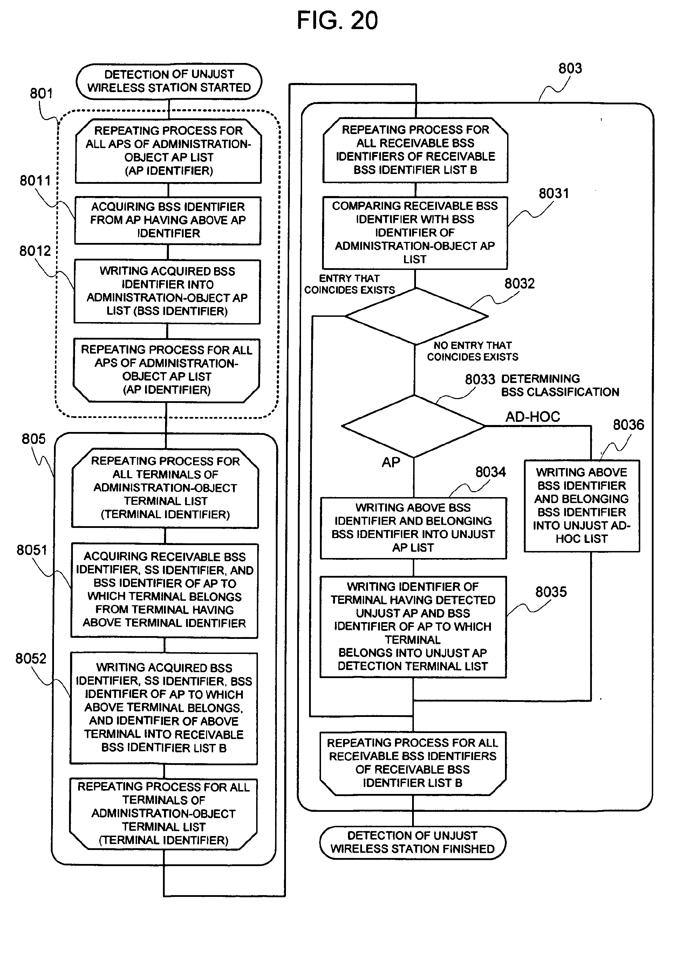

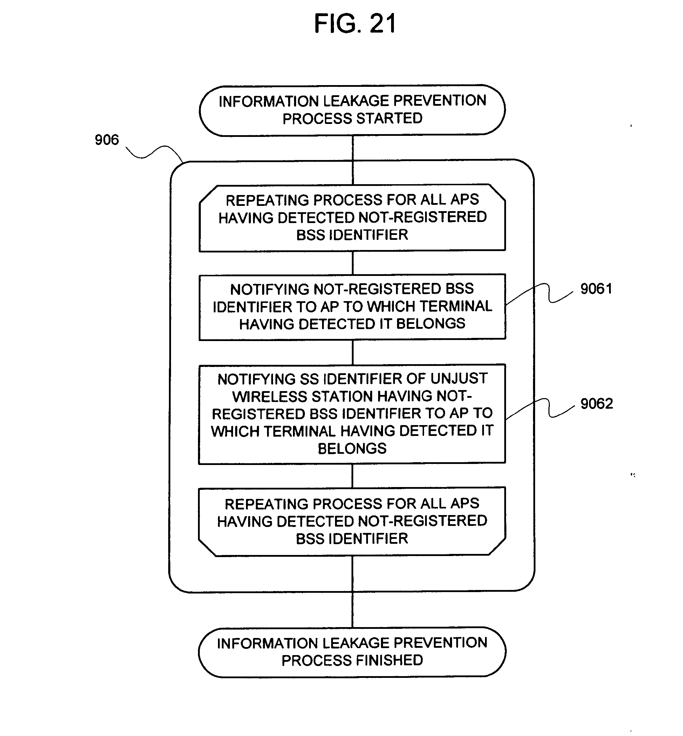

Each of Fig. 20 and Fig. 21 is a view illustrating an operation of the operation administering apparatus in the process flow, and in Fig. 20, identical codes are affixed to the identical portion to Fig. 4. A difference with the embodiment 1 lies in a point that the processes of 805 of Fig. 20 and 906 of Fig. 21 are added/changed, and a point that 902 and 903 of Fig. 5 are deleted. In 805 of Fig. 20, the operation administering apparatus acquires the SSID in addition to the receivable BSSID from the administration-object terminal (8051 of Fig. 20), and files it into the receivable BSS identifier list B (8052 of Fig. 20). In 906 of Fig. 21, the operation administering apparatus notifies the SSID of the unjust AP that the terminal making a connection with its administration-object AP has detected to the administration-object AP to which the administration-object terminal having detected the unjust AP belongs (9061 and 9062 of Fig. 20).

The terminal that intends to utilize the wireless LAN, as a rule, searches the surroundings to acquire the receivable SSIDs, and tries to make a connection with the wireless LAN having a desired SSID from among them. For this, an unjust invasion into the wire net by using the unjust AP necessitates the procedure of installing the unjust AP to make a connection with its unjust AP, and to invade into the wire net.

In this embodiment, the operation administering apparatus acquires the SSID of the unjust AP from the administration-object terminal (712 of Fig. 17), and sets the SSID of the acquired unjust AP for the administration-object AP (713 of Fig. 17 and 9062 of Fig. 21). The administration-object AP loads the above SSID into a beacon for transmission, whereby the environments in which a plurality of the APs each having a different BSSID but an identical SSID exist is erected, which lowers the frequency that the terminal that tries to make a connection with the unjust AP succeeds in making a connection with the unjust AP. Its terminal is sometimes connected with administration-object AP, and in this case, it follows that communication between the above terminal and the wire net is interrupted.

As mentioned above, in accordance with the present invention, using the specific BSS identifier for determining the unjust wireless station makes it possible to detect/display not only the access point telling a falsehood about the SS identifier but also the access point concealing the SS identifier as an unjust wireless station. Further, displaying the unjust wireless station classification by classification allows the scope of the object, which is investigated, to be narrowed down, and the investigation/withdrawal practice of the unjust wireless station to be improved. In addition hereto, by acquiring the identifier of the terminal having connected with the unjust AP to scrap the frame by means of the access point or the wire LAN switch with the above identifier assumed to be a key, the security that can prevent an access to the wire net from being made via the unjust AP and information from leaking is improved.

Each operational flow mentioned above is a flow for enabling such a step to be executed of pre-filing the operational procedure as a program in a record medium to cause a computer to read this for execution.

## Claims

1. A wireless communication system including an administration-object wireless base station having a specific identifier, **characterized in** including an unjust wireless station detecting means for, based upon said specific identifier to be included in a wireless frame, detecting existence of an unjust wireless station.

2. The wireless communication system according to claim 1, **characterized in that** said unjust wireless station detecting means includes:
a comparing means for comparing said specific identifier with a pre-registered specific identifier; and
a means for determining said unjust wireless station based upon this comparison result.

3. The wireless communication system according to claim 1, **characterized in that**, when a group of a wireless communication terminal and a wireless base station each of which communicates with the other is assumed to be a basic service set, said specific identifier is an identifier (BSS identifier) for identifying this basic service set.

4. The wireless communication system according to claim 3, **characterized in that** said unjust wireless station detecting means further includes a means for determining a classification of said unjust wireless station from said BSS identifier.

5. The wireless communication system according to claim 3, **characterized in that** said unjust wireless station detecting means further includes a means for determining a producer of said unjust wireless station from said BSS identifier.

6. The wireless communication system according to claim 1, **characterized in**:
including an administration-object wireless base station having a means for acquiring a wireless frame to obtain said specific identifier, said administration-object wireless base station being administered by a system; and
that said unjust wireless station detecting means further includes a means for obtaining said specific identifier from said administration-object wireless base station.

7. The wireless communication system according to claim 1, **characterized in**:
including an administration-object wireless communication terminal having a means for acquiring a wireless frame to obtain said specific identifier, said administration-object wireless communication terminal being administered by a system; and
that said unjust wireless station detecting means further includes a means for obtaining said specific identifier from said administration-object wireless communication terminal.

8. The wireless communication system according to claim 1, **characterized in that** said unjust wireless station detecting means further includes a means for notifying the effect that utilization of said unjust wireless station is prohibited to the administration-object wireless communication terminal connected to said unjust wireless station.

9. The wireless communication system according to claim 1, **characterized in**:
further including a switching apparatus;
that said unjust wireless station detecting means further includes a means for detecting an address of the unjust wireless communication terminal connected to said unjust wireless station to notify said address to the said switching apparatus; and
that said switching apparatus includes a means for scrapping the wireless frame including said address.

10. The wireless communication system according to claim 1, **characterized in that** said unjust wireless station detecting means further includes a means for notifying said unjust wireless communication terminal to said administration-object wireless base station, and further, for notifying said unjust wireless station to the administration-object wireless communication terminal connected to said administration-object wireless base station.

11. The wireless communication system according to claim 1, **characterized in that** said unjust wireless station detecting means further includes a means for taking a control so as to incapacitate the unjust wireless communication terminal connected to said administration-object wireless base station from communicating.

12. The wireless communication system according to claim 1, **characterized in that**:
said unjust wireless station detecting means further includes a means for notifying an identifier (SS identifier) for identifying a service set of said unjust wireless station acquired from said wireless frame to the administration-object wireless base station around said unjust wireless station; and
the administration-object wireless base station receiving a notification of said SS identifier includes a means for, in a case of having received a wireless frame from the wireless communication terminal having made a connection by using an identical value to that of said SS identifier, scrapping this wireless frame.

13. An operation administering apparatus in a wireless communication system including an administration-object wireless base station having a specific identifier, **characterized in** including an unjust wireless station detecting means for, based upon the specific identifier to be included in a wireless frame, detecting existence of an unjust wireless station.

14. The operation administering apparatus according to claim 13, **characterized in that** said unjust wireless station detecting means includes:
a comparing means for comparing said specific identifier with a pre-registered specific identifier; and
a means for determining said unjust wireless station based upon this comparison result.

15. The operation administering apparatus according to claim 13, **characterized in that**, when a group of a wireless communication terminal and a wireless base station each of which communicates with the other is assumed to be a basic service set, said specific identifier is an identifier (BSS identifier) for identifying this basic service set.

16. The operation administering apparatus according to claim 15, **characterized in** further including a means for determining a classification of said unjust wireless station from said BSS identifier.

17. The operation administering apparatus according to claim 15, **characterized in** further including a means for determining a producer of said unjust wireless station from said BSS identifier.

18. The operation administering apparatus according to claim 13, **characterized in** further including a means for obtaining said specific identifier from the administration-object wireless base station configured so as to acquire the wireless frame administered by the system, thereby to obtain said specific identifier.

19. The operation administering apparatus according to claim 13, **characterized in** further including a means for obtaining said specific identifier from the administration-object wireless communication terminal configured so as to acquire the wireless frame administered by the system, thereby to obtain said specific identifier.

20. The operation administering apparatus in according to claim 13, **characterized in** further including a means, for notifying the effect that utilization of said unjust wireless station is prohibited to the administration-object wireless communication terminal connected to said unjust wireless station.

21. The operation administering apparatus according to claim 13, **characterized in** further including a means for detecting an address of the unjust wireless communication terminal connected to said unjust wireless station to notify said address to said switching apparatus.

22. The operation administering apparatus according to claim 13, **characterized in** further including a means for notifying said unjust wireless communication terminal to said administration-object wireless base station, and further, for notifying said unjust wireless station to the administration-object wireless communication terminal connected to said administration-object wireless base station.

23. The operation administering apparatus according to claim 13, **characterized in** further including a means for taking a control so as to incapacitate the unjust wireless communication terminal connected to said administration-object wireless base station from communicating.

24. The operation administering apparatus according to claim 13, **characterized in** further including a means for notifying an identifier (SS identifier) for identifying a service set of said unjust wireless station acquired from said wireless frame to the administration-object wireless base station around said unjust wireless station.

25. A wireless base station in a wireless communication system including an administration-object wireless base station having a specific identifier and an operation administering apparatus for making an operational administration for a system, **characterized in** including:
a means for acquiring said specific identifier from a wireless frame; and
a means for notifying said specific identifier to said operation administering apparatus in order to detect existence of the unjust wireless station.

26. The wireless base station according to claim 25, **characterized in** further including a means for receiving a notification of the unjust wireless communication terminal from said operation administrating apparatus to incapacitate said unjust wireless communication terminal from communicating.

27. The wireless base station according to claim 25, **characterized in** further including a means for receiving a notification of an identifier (SS identifier) for identifying a service set of said unjust wireless station from said operation administering apparatus, and for, in a case of having received a wireless frame from the wireless communication terminal having made a connection by using a value identical to that of said SS identifier, scrapping this wireless frame.

28. A wireless communication terminal in a wireless communication system including an administration-object wireless base station having a specific identifier and an operation administering apparatus for making an operational administration for a system, **characterized in** including:
a means for acquiring said specific identifier from a wireless frame; and
a means for notifying said specific identifier to said operation administering apparatus in order to detect existence of the unjust wireless station.

29. The wireless communication terminal according to claim 28, **characterized in** further including a means for prohibiting utilization of said unjust wireless station notified from said operation administering apparatus.

30. An unjust wireless station detection method in a wireless communication system including an administration-object wireless base station having a specific identifier, **characterized in** including a step of detecting existence of an unjust wireless station based upon the specific identifier to be included in a wireless frame.

31. An operational control method of a wireless base station in a wireless communication system including an administration-object wireless base station having a specific identifier and an operation administering apparatus for making an operational administration for a system, **characterized in** including the steps of:
acquiring said specific identifier from a wireless frame; and
notifying said specific identifier to said operation administering apparatus in order to detect existence of the unjust wireless station.

32. An operational control method of a wireless communication terminal in a wireless communication system including an administration-object wireless base station having a specific identifier and an operational administering apparatus for making an operational administration for a system, **characterized in** including the steps of:
acquiring said specific identifier from a wireless frame; and
notifying said specific identifier to said operation administering apparatus in order to detect existence of the unjust wireless station.

33. A program for causing a computer to execute an unjust wireless station detection method in a wireless communication system including an administration-object wireless base station having a specific identifier, **characterized in** including a process of detecting existence of an unjust wireless station based upon the specific identifier to be included in a wireless frame.

34. A program for causing a computer to execute an operational control method of a wireless base station in a wireless communication system including an administration-object wireless base station having a specific identifier and an operation administering apparatus for making an operational administration for a system, **characterized in** including the processes of:
acquiring said specific identifier from a wireless frame; and
notifying said specific identifier to said operation administering apparatus in order to detect existence of the unjust wireless station.

35. A program for causing a computer to execute an operational control method of a wireless communication terminal in a wireless communication system including an administration-object wireless base station having a specific identifier and an operation administering apparatus for making an operational administration for a system, **characterized in** including the processes of:
acquiring said specific identifier from a wireless frame; and
notifying said specific identifier to said operational administering apparatus in order to detect existence of the unjust wireless station.
